# EUROPEAN PATENT SPECIFICATION

(11) **EP 2 923 564 B1**
(45) Date of publication and mention of the grant of the patent: **26.10.2016**
(21) Application number: 15161692.7
(22) Date of filing: 30.03.2015
(51) Int. Cl.: A01K 1/00, F24F 13/02, F24F 1/00

(54) **Shed system**
Stalleinrichtung
Système d'étable

(30) Priority: 28.03.2014 NL 2012529
(43) Date of publication of application: 30.09.2015
(73) Proprietor: Sunbro B.V., 7496 PC Hengevelde (NL)
(72) Inventor: Grefte, Paulus Jozef Maria, 7496 PC Hengevelde (NL)
(74) Representative: Jacobs, Bart

(56) References cited:
- WO-A1-2009/079722
- US-A- 4 700 887

## Description

The present invention relates to a shed system. Such shed systems are known and are used for instance to keep poultry.

For the welfare of the animals in the shed, the current sheds are equipped with climate control systems. An example of such a shed system is known from NL 1011714 and WO-A-2009/079722.

In the known shed system use is made of an acclimatization corridor. Such a corridor is about 1 metre wide and runs parallel to an outer wall of the shed system. Provided in the outer wall of the shed system is a plurality of grilles through which outside air can be drawn in using an underpressure generated in the shed system by fans. Received in the acclimatization corridor is a plurality of heat exchangers which heat or cool the indrawn air. In a partition wall between the acclimatization corridor and the actual shed part intended for keeping for instance poultry, openings are likewise provided for supplying heated or cooled air to the actual shed part.

A drawback of the known shed system is that the acclimatization corridor takes up space which cannot be used to keep for instance poultry. A further drawback is that, due to the double-wall construction, the known system is not suitable for the placing of windows, or hardly so.

An object of the present invention is to provide a shed system provided with one or more windows. The use of windows creates a natural light incidence in the shed, whereby the quality of life of the animals living in the shed system is improved.

This object is achieved by means of a shed system as defined in claim 1. According to the invention the shed system comprises a foundation, a pair of uprights which each support on the foundation, a transverse connection between the pair of uprights and a roof construction which supports on the uprights. According to the invention the foundation can comprise one or more sub-foundations which are not mutually coupled. It is thus possible to only pour concrete or arrange another type of foundation at the position of an upright. It is of course also possible however for the foundation to be one large continuous foundation.

The space between the foundation, the uprights and the transverse connection forms a first space and the space between the transverse connection, the uprights and the roof construction forms a second space. According to the invention the shed system further comprises a window frame placed in the first or second space and an inner wall-outer wall pair placed in the other of the first or second space, wherein an air channel is formed between the inner wall and outer wall of the inner wall-outer wall pair and wherein the outer wall defines or comprises an air inlet suitable for drawing in air from outside.

According to the invention the outer wall can comprise an air inlet, for instance in that the outer wall has one or more openings which can be formed as gratings. It is however also possible for the outer wall to define an air inlet in that the outer wall is placed at a distance from another structure, such as a ground surface or ground level, and for the opening between the outer wall and this other structure to serve as air inlet.

According to the invention the shed system comprises a heat exchanger placed in the air channel. The heat exchanger can here exchange heat with the air in the air channel. The exchange of heat can relate to a cooling process or heating process. The depth of the heat exchanger is generally equal to or smaller than the depth of the uprights. According to the invention a plurality of relatively small heat exchangers is therefore used, whereby the uniformity of the airflow in the direction of the shed is improved.

The shed system according to the invention also comprises an air guide which is connected to the transverse connection and which bounds the air channel on one side and forms a barrier to airflow parallel to the inner wall-outer wall pair, and defines or comprises an air outlet suitable for enabling an airflow directed into the shed. According to the invention the air guide can comprise an air outlet, for instance in that the air guide has one or more openings which can be formed as gratings. It is however also possible that the air guide defines an air outlet in that the air guide is placed at a distance from another structure, such as the transverse connection or the inner wall, and that the opening between the air guide and this other structure serves as air outlet.

According to the invention an outer wall of the shed system is divided into at least two parts, wherein use is made in one part of an inner wall-outer wall pair, and in another a window frame is placed for the purpose of forming a window. The function of the prior art acclimatization corridor is hereby realized in the air channel between the inner wall and the outer wall.

An advantage of using the air guide according to the invention is that it can be manufactured as one component which extends between the uprights. The construction of the shed system is considerably simplified here.

In an embodiment the window frame is connected on an underside thereof to the transverse connection and supports thereon. The inner wall is further connected to the pair of uprights and extends upward as far as the air guide. The inner wall is optionally connected substantially airtightly to the guide. The outer wall is also connected to the pair of uprights and/or the transverse connection and extends to a predetermined height above ground level from the transverse connection, wherein the opening between the ground level and the outer wall forms the air inlet. As stated above, the outer wall can continue all the way to ground level, although the outer wall is in that case provided with openings for the purpose of forming the air inlet.

In this embodiment the window is placed above the inner wall-outer wall pair and the air is drawn in just above ground level. In another embodiment the inner wall-outer wall pair is placed above the window. The window frame is for this purpose connected on an upper side thereof to the transverse connection and the inner wall is connected to the pair of uprights and extends downward from the roof construction as far as the air guide. The outer wall is further connected to the pair of uprights and extends upward from the transverse connection to a predetermined height under the roof construction, wherein the opening between the roof construction and the outer wall forms the air inlet. The outer wall can however also continue all the way to the roof construction, wherein the outer wall is provided with openings for the purpose of forming the air inlet.

The air guide can comprise a first surface which is coupled to the transverse connection and is placed substantially transversely in the air channel, and can further comprise a second surface which is connected to the first surface and lies at an angle relative to the first surface. The second surface can be provided here with an opening which defines the air outlet. It is however also possible for a space between the inner wall and the second surface to define the air outlet.

It is recommended that the air guide can be placed as one component between the uprights, wherein the air channel formed by the inner wall-outer wall pair associated with that pair of uprights is bounded at one end in one operation. It is noted here that, within the context of the invention, a placing between uprights does not preclude embodiments wherein placing is performed from one upright to the other upright, for instance in that a plate part is attached to a side of the uprights remote from the shed.

It is recommended that the air outlet and/or the air inlet are adjustable. It is thus possible to realize the size of an opening for air outlet and/or air inlet in adjustable manner. This can be achieved for instance when the air guide comprises a valve for blocking or leaving the air outlet at least partially clear and/or when the shed system comprises a valve for blocking or leaving the air inlet at least partially clear. The shed system can here comprise a first controllable actuator for operating the valve of the air guide and/or a second controllable actuator for operating the valve for the purpose of blocking or leaving the air inlet at least partially clear.

The heat exchanger can comprise a plurality of heat-exchanging elements, along which the air drawn in through the air inlet flows. These elements can for instance be embodied as a conduit system. It can further be possible that a temperature of the heat-exchanging elements is adjustable by allowing a fluid to flow through the elements. The shed system here further comprises a system for heating or cooling the fluid and a pump for pumping the heated or cooled fluid through the elements.

The shed system can be equipped with a fan system for discharging air from the shed system to an area around the shed system.

It is recommended that the shed system be equipped with a control system for controlling the temperature of the air in the shed. The control system can be provided here with a temperature sensor for measuring the temperature in the shed, and the control system is configured to control at least the actuator for the valve of the air guide and/or the actuator for the valve for blocking or leaving the air inlet at least partially clear, as well as the system for heating or cooling the fluid subject to a difference between a desired temperature and a measured temperature of the air in the shed.

In a further embodiment the control system is further configured to also control the fan system subject to a difference between a desired temperature and a measured temperature of the air in the shed, as well as a desired speed at which the desired temperature has to be reached.

The invention will be discussed in more detail hereinbelow, wherein:
Figure 1 is a partly cut-away schematic view of a first embodiment of the present invention as seen from the shed;
Figure 2 is a partly cut-away schematic view of the first embodiment of the present invention as seen from outside the shed;
Figure 3 shows a cross-section of the first embodiment;
Figure 4 shows an embodiment of an air guide for the embodiment of the shed system of figure 1;
Figure 5 is a partly cut-away schematic view of a second embodiment of the present invention as seen from the shed;
Figure 6 is a partly cut-away schematic view of the second embodiment of the present invention as seen from outside the shed; and
Figure 7 shows a control system for application in a shed system according to the present invention.

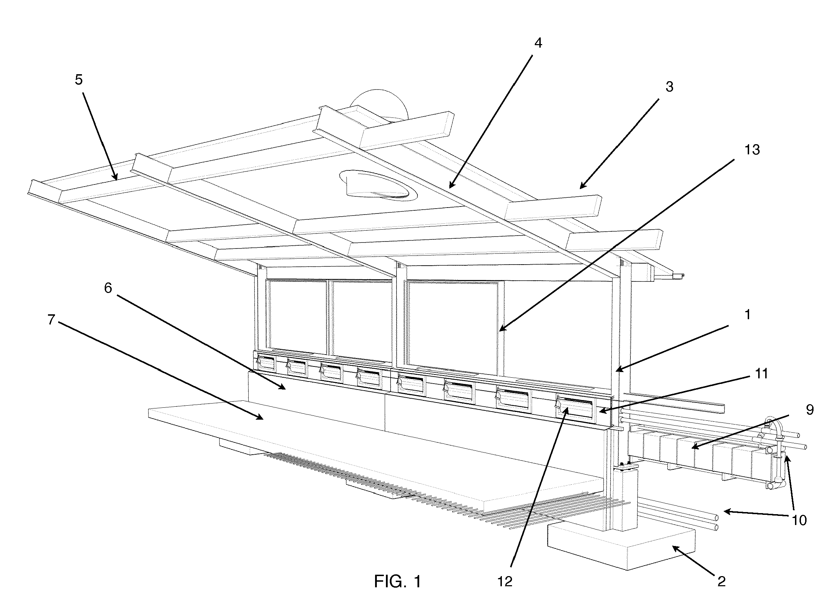

Figure 1 is a partly cut-away schematic view of a first embodiment of the present invention as seen from the shed. In the first embodiment the window is placed above the inner wall-outer wall pair.

In the first embodiment a pair of uprights 1 are placed on a concrete foundation plate 2. Uprights 1 are preferably manufactured from metal and support a roof construction 3. Roof construction 3 usually comprises reinforcements in the transverse direction and longitudinal direction of the shed in the form of beams 4, 5, which usually consist of wood. A coupling is usually made between uprights 1 and a beam 5 for the purpose of connecting roof construction 3 to uprights 1.

Also shown in figure 1 is an inner wall 6 which supports on foundation plate 2 and which is connected to uprights 1. Inner wall 6 can be manufactured from a concrete panel with insulation foam as filling. A floor 7 is placed which generally is neither connected to nor supports directly on a foundation plate 2 but rests on a ground surface of sand. This floor can comprise a concrete floor which is provided with floor heating pipes.

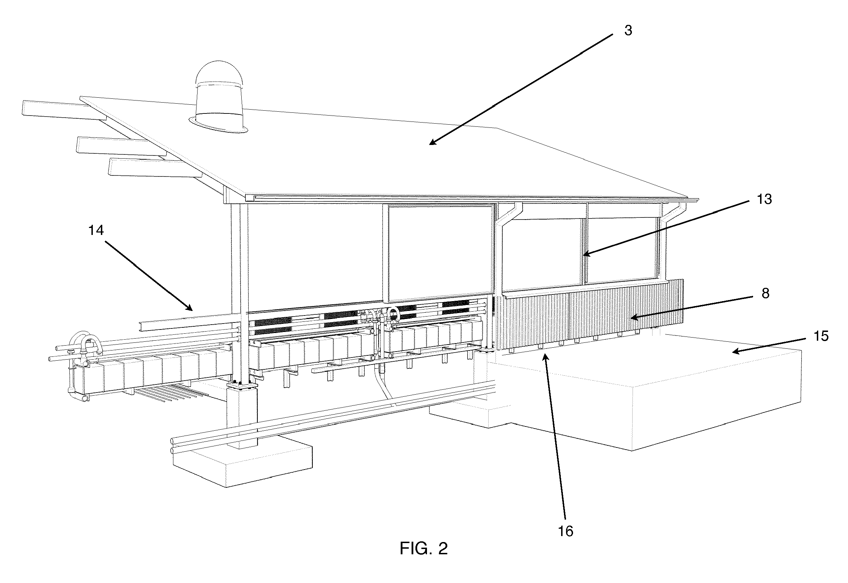

A heat exchanger 9 is placed between inner wall 6 and an outer wall 8, which is shown in figure 2. This comprises a plurality of conduits through which a liquid such as water or glycol is pumped. This liquid can be heated or cooled. Outer wall 8 can here comprise a sandwich panel consisting of two steel plates, each for instance 0.5 mm thick, and an 80 mm filling of insulation foam. Other insulated panels, for instance of wood or plastic, can optionally also be used.

Heat exchanger 9 is coupled to a conduit system 10 for supply and discharge of the liquid. Heat exchanger 9 is preferably manufactured here from plastic or metal. This system can be arranged partially in the ground. It is recommended that a plurality of individual heat exchangers 9 are used between each pair of uprights 1. Conduit system 10 can for this purpose comprise a discharge conduit and supply conduit for all heat exchangers 9 between a pair of uprights 1. These conduits can be manufactured from polyethylene, metal or PVC. The conduits are laid in the ground and preferably rise upward roughly halfway between the pair of uprights 1. Conduit system 10 then comprises conduits for mutually coupling all heat exchangers 9 between the pair of uprights 1. In figure 1 these conduits are shown above heat exchanger 9. In figure 1 the discharge conduit and supply conduit are also guided upward for the purpose of connecting heat exchangers between multiple pairs of uprights 1. Conduits can be carried through uprights 1 in order to couple the heat exchangers. It is however recommended to couple only those heat exchangers which are placed between one pair of uprights.

Figure 1 further shows an air guide 11 which comprises adjustable openings 12. Openings 12 are each closable with a valve, the position of which can be controlled by an actuator (not shown). Air guide 11 is preferably manufactured from plastic or another material with sufficient insulating value. Openings 12 preferably form a plastic inlet valve.

As shown in figure 1, the first embodiment of the shed system comprises a window frame 13 in which a window is or can be placed. Window frame 13 is preferably a plastic frame here, preferably with insulating glass or polycarbonate. The window can be provided with a sunblind for regulating the amount of sunlight entering the shed.

The outside view of the first embodiment, which is shown in figure 2, shows outer wall 8 which is connected to a transverse connection 14 which supports window frame 13. Transverse connection 14 for instance comprises a metal U-profile. Outer wall 8 further extends from transverse connection 14 to a predetermined height above ground level 15. An opening 16 is hereby formed through which air can be drawn in from outside.

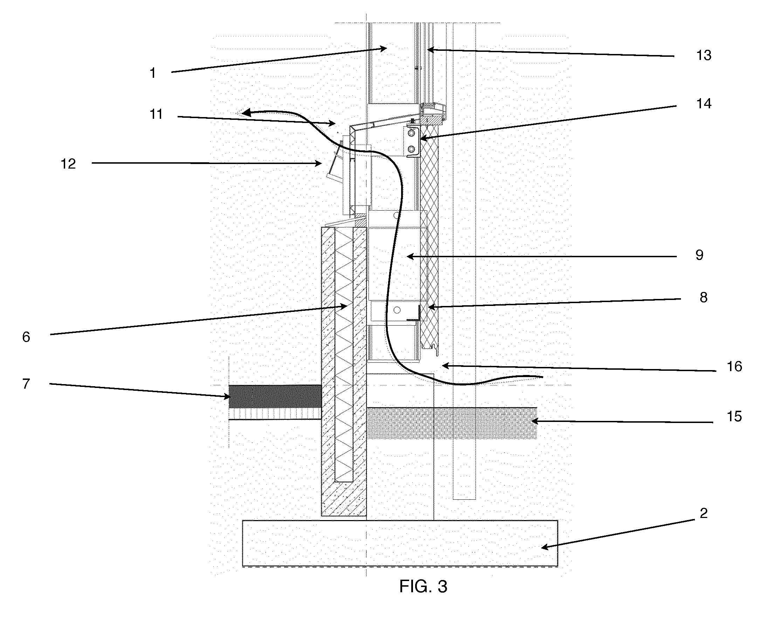

Prevailing in the shed system is an underpressure which is for instance achieved by means of a fan system which blows air outside. Owing to the prevailing underpressure air will enter via opening 16 an air channel formed by outer wall 8, inner wall 6 and air guide 11. The air will be cooled or heated in the air channel by heat exchanger 9. The air will then be guided via adjustable openings 12 into the shed. This airflow is shown with a broken line in the cross-section of figure 3. It will also be apparent from this figure that the underside of the air channel is bounded by ground level 15 and the upper side by air guide 11. Ground level 15 is formed by a ground surface, such as a ground surface of sand. Ground level 15 can however also be formed by chippings, asphalt, concrete, gravel or clinkers.

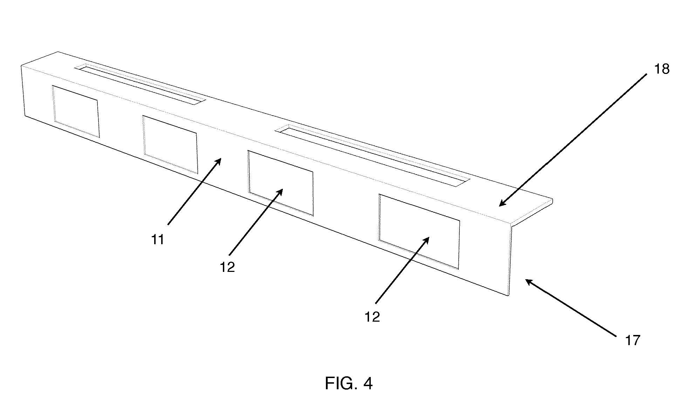

Figure 4 shows an embodiment of air guide 11 which is used in the first embodiment of figure 1. Air guide 11 is placed as one whole between uprights 1 so that the air channel is formed for the whole width between uprights 1 in one operation. This facilitates the process of manufacturing the shed system.

During manufacture inner wall 6 is first placed on foundation plate 2, after which inner wall 6 is attached to posts 1. Air guide 11 can then be attached to transverse connection 14 and to the upper side of inner wall 6. This prevents air entering the shed in ways other than via adjustable openings 12.

As shown in figure 4, air guide 11 comprises two surfaces 17, 18 lying at an angle to each other of preferably between 80 and 120 degrees. Surface 18 is attached here to transverse connection 14 and surface 17 is attached to inner wall 6.

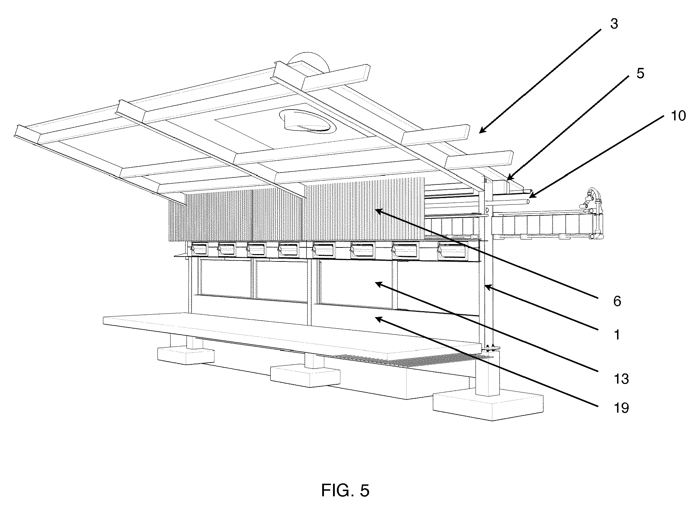

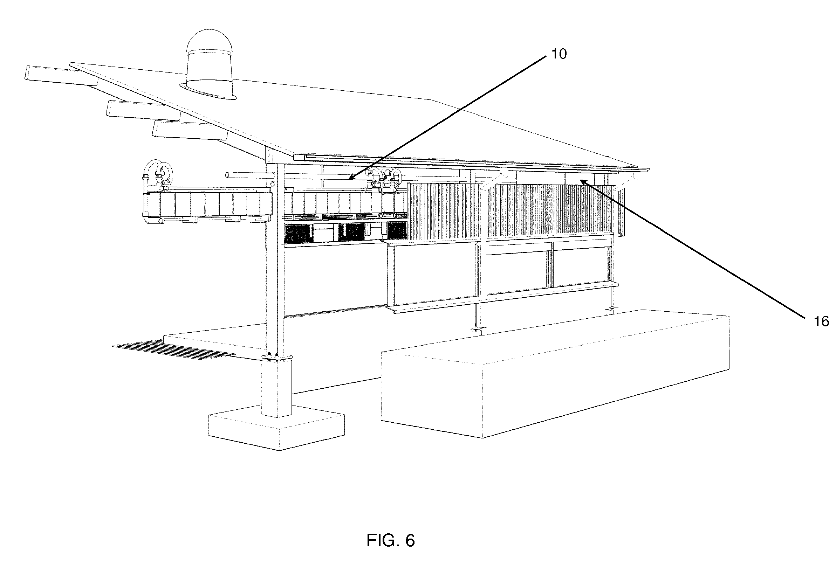

Figures 5 and 6 show a second embodiment of the shed system according to the present invention. Components similar to the components of figures 1-4 are designated in these figures with identical reference numerals.

In the second embodiment window frame 13 is placed under the inner wall 6 - outer wall 8 pair. Window frame 13 is connected on an upper side to transverse connection 14. On an underside window frame 13 supports on a further transverse connection 19. Inner wall 6 extends from roof construction 3 as far as air guide 11, to which inner wall 6 is connected. Air guide 11 is also connected to transverse connection 14. As shown in figure 6, outer wall 8 extends from transverse connection 14 to a predetermined height under roof construction 3. An opening 16 is hereby formed through which air can be drawn in from outside. A heat exchanger 9 is once again placed in the air channel formed by inner wall 6 and outer wall 8. On the upper side this air channel is bounded by roof construction 3, on the underside by air guide 11.

In the second embodiment it is recommended to place conduit system 10 on the upper side of the shed, between inner wall 6 and outer wall 8. Conduits are optionally laid over the whole length or a considerable part thereof, wherein uprights 1 are provided with openings for passage of conduits. Uprights 1 optionally take a hollow form and the supply and/or discharge conduits are optionally transported downward in the upright to the other part of conduit system 10, which is placed in the ground. It is however also possible for the supply and/or discharge conduits to also be placed between inner wall 6 and outer wall 8.

In the second embodiment the windows can be placed lower, whereby the living environment of the livestock to be kept in the shed system can be improved still further.

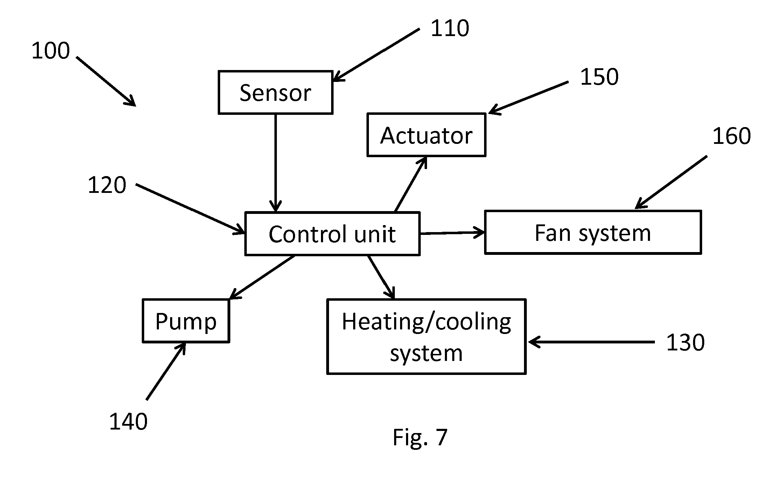

Figure 7 shows an exemplary embodiment of a control system 100 for use in the shed system according to the present invention. This system uses a temperature sensor 110 for measuring the air temperature in the shed. This information is then compared to a desired temperature by a control unit 120. If the temperature is lower, control unit 120 will control heating/cooling system 130 so as to transport liquid of a suitable temperature through the heat exchanger. The liquid temperature can optionally be chosen and/or changed here. If desired, control unit 120 can also control pump 140 for the purpose of obtaining a suitable velocity of the liquid through the heat exchanger. The suitable velocity and temperature depend here on the temperature difference that has to be bridged, the speed at which this has to take place and the amount of air passing through the air channel.

Control unit 120 can also control actuators 150 for the purpose of controlling the valves of the air guides and a fan system 160. The control of these components determines the underpressure in the shed and the amount of air and the velocity thereof in the air channel.

It will be apparent to the skilled person that various modifications can be made to the exemplary embodiments shown here without departing from the scope of protection of the present invention, which is defined by the following claims.

## Claims

1. Shed system, comprising:
a foundation (2);
a pair of uprights (14) which each support on the foundation;
a transverse connection (14) between the pair of uprights;
a roof construction which supports on the uprights;
wherein a space between the foundation, the uprights and the transverse connection forms a first space and the space between the transverse connection, the uprights and the roof construction forms a second space;
a window frame (13) placed in the first or second space;
an inner wall (6) - outer wall (8) pair placed in the other of the first or second space, wherein an air channel is formed between the inner wall and outer wall of the inner wall-outer wall pair and wherein the outer wall defines or comprises an air inlet suitable for drawing in air from outside;
a heat exchanger (9) placed in the air channel;
an air guide (11) which is connected to the transverse connection and which bounds the air channel on one side and forms a barrier to airflow parallel to the inner wall-outer wall pair, and defines or comprises an air outlet suitable for enabling an airflow directed into the shed.

2. Shed system as claimed in claim 1, wherein:
the window frame is connected on an underside thereof to the transverse connection and supports thereon;
the inner wall is connected to the pair of uprights and extends upward as far as the air guide;
the outer wall is connected to the pair of uprights and/or the transverse connection and extends to a predetermined height above ground level from the transverse connection, wherein the opening between the ground level and the outer wall forms the air inlet.

3. Shed system as claimed in claim 1, wherein:
the window frame is connected on an upper side thereof to the transverse connection;
the inner wall is connected to the pair of uprights and extends downward from the roof construction as far as the air guide;
the outer wall is connected to the pair of uprights and extends upward from the transverse connection to a predetermined height under the roof construction, wherein the opening between the roof construction and the outer wall forms the air inlet.

4. Shed system as claimed in any of the foregoing claims, wherein the air guide comprises a first surface which is coupled to the transverse connection and is placed substantially transversely in the air channel, and comprises a second surface which is connected to the first surface and lies at an angle relative to the first surface, wherein the second surface is provided with an opening which defines the air outlet, or wherein a space between the inner wall and the second surface defines the air outlet.

5. Shed system as claimed in any of the foregoing claims, wherein the air outlet and/or the air inlet are adjustable.

6. Shed system as claimed in claim 5, wherein the air guide comprises a valve for blocking or leaving the air outlet at least partially clear and/or wherein the shed system comprises a valve for blocking or leaving the air inlet at least partially clear.

7. Shed system as claimed in claim 6, comprising a first controllable actuator for operating the valve of the air guide and/or a second controllable actuator for operating the valve for the purpose of blocking or leaving the air inlet at least partially clear.

8. Shed system as claimed in any of the foregoing claims, wherein the heat exchanger comprises a plurality of heat-exchanging elements, along which the air drawn in through the air inlet flows.

9. Shed system as claimed in claim 8, wherein a temperature of the heat-exchanging elements is adjustable by allowing a fluid to flow through the elements, the shed further comprising a system for heating or cooling the fluid and a pump for pumping the heated or cooled fluid through the elements.

10. Shed system as claimed in any of the foregoing claims, further comprising a fan system for discharging air from the shed system to an area around the shed system.

11. Shed system as claimed in claims 7 and 9, further comprising a control system for controlling the temperature of the air in the shed, wherein the control system is provided with a temperature sensor for measuring the temperature in the shed, and wherein the control system is configured to control at least the actuator for the valve of the air guide and/or the actuator for the valve for blocking or leaving the air inlet at least partially clear, as well as the system for heating or cooling the fluid subject to a difference between a desired temperature and a measured temperature of the air in the shed.

12. Shed system as claimed in claims 10 and 11, wherein the control system is further configured to also control the fan system subject to a difference between a desired temperature and a measured temperature of the air in the shed, as well as a desired speed at which the desired temperature has to be reached.

## Patentansprüche

1. Überdachungs-System, aufweisend:
ein Fundament (2),
ein Paar Pfosten (14), welche sich jeweils auf dem Fundament abstützen,
eine Querverbindung (14) zwischen dem Paar Pfosten,
eine Dachkonstruktion, welche sich auf den Pfosten abstützt,
wobei ein Raum zwischen dem Fundament, den Pfosten und der Querverbindung einen ersten Raum bildet und der Raum zwischen der Querverbindung, den Pfosten und der Dachkonstruktion einen zweiten Raum bildet,
einen Fensterrahmen (13), der in dem ersten oder dem zweiten Raum angeordnet ist,
ein Innenwand (6)-Außenwand (8)-Paar, das in dem anderen von dem ersten und dem zweiten Raum angeordnet ist, wobei ein Luftkanal zwischen der Innenwand und der Außenwand des Innenwand-Außenwand-Paars ausgebildet ist und wobei die Außenwand einen Lufteinlass definiert oder aufweist, der geeignet ist zum Einziehen von Luft von der Außenseite her,
einen Wärmetauscher (9), der in dem Luftkanal angeordnet ist,
eine Luftführung (11), die mit der Querverbindung verbunden ist und die den Luftkanal auf einer Seite begrenzt und eine Barriere für Luftströmung parallel zu dem Innenwand-Außenwand-Paar bildet, und die einen Luftauslass definiert oder aufweist, der geeignet ist zum Ermöglichen einer Luftströmung, die in die Überdachung hinein gerichtet ist.

2. Überdachungs-System gemäß Anspruch 1, wobei
der Fensterrahmen an einer Unterseite davon mit der Querverbindung verbunden ist und sich an dieser abstützt,
die Innenwand mit dem Paar Pfosten verbunden ist und sich sowie weite wie die Luftführung nach oben erstreckt,
die Außenwand mit dem Paar Pfosten und/oder der Querverbindung verbunden ist und sich zu einer vorbestimmten Höhe über Bodenniveau von der Querverbindung aus erstreckt, wobei die Öffnung zwischen dem Bodenniveau und der Außenwand den Lufteinlass bildet.

3. Überdachungs-System gemäß Anspruch 1, wobei:
der Fensterrahmen an einer Oberseite davon mit der Querverbindung verbunden ist,
die Innenwand mit dem Paar Pfosten verbunden ist und sich von der Dachkonstruktion aus so weit wie die Luftführung nach unten erstreckt,
die Außenwand mit dem Paar Pfosten verbunden ist und sich von der Querverbindung aus zu einer vorbestimmten Höhe unter der Dachkonstruktion erstreckt, wobei die Öffnung zwischen der Dachkonstruktion und der Außenwand einen Lufteinlass bildet.

4. Überdachungs-System gemäß irgendeinem der vorhergehenden Ansprüche, wobei die Luftführung aufweist eine erste Fläche, die mit der Querverbindung verbunden ist und im Wesentlichen quer im Luftkanal angeordnet ist, und aufweist eine zweite Fläche, die mit der ersten Fläche verbunden ist und in einem Winkel relativ zur ersten Fläche liegt, wobei die zweite Fläche mit einer Öffnung versehen ist, die den Luftauslass definiert, oder wobei ein Raum zwischen der Innenwand und der zweiten Fläche den Luftauslass definiert.

5. Überdachungs-System gemäß irgendeinem der vorhergehenden Ansprüche, wobei der Luftauslass und/oder der Lufteinlass einstellbar sind.

6. Überdachungs-System gemäß Anspruch 5, wobei die Luftführung ein Ventil aufweist zum Blockieren oder zumindest teilweise frei Lassen des Luftauslasses, und/oder wobei das Überdachungs-System ein Ventil aufweist für den Zweck des Blockierens oder zumindest teilweise frei Lassens des Lufteinlasses.

7. Überdachungs-System gemäß Anspruch 6, aufweisend einen ersten steuerbaren Aktuator zum Betätigen des Ventils der Luftführung und/oder einen zweiten steuerbaren Aktuator zum Betätigen des Ventils für den Zweck des Blockierens oder zumindest teilweise frei Lassens des Lufteinlasses.

8. Überdachungs-System gemäß irgendeinem der vorhergehenden Ansprüche, wobei der Wärmetauscher aufweist eine Mehrzahl von wärmetauschenden Elementen, entlang welcher die Luft strömt, die durch den Lufteinlass hindurch eingezogen wurde.

9. Überdachungs-System gemäß Anspruch 8, wobei eine Temperatur der wärmetauschenden Elemente dadurch einstellbar ist, dass es einem Fluid erlaubt wird, durch die Elemente hindurch zu strömen, wobei das Überdachungs-System ferner aufweist ein System zum Erwärmen oder Kühlen des Fluid und eine Pumpe zum Pumpen des erwärmten oder gekühlten Fluid durch die Elemente.

10. Überdachungs-System gemäß irgendeinem der vorhergehenden Ansprüche, ferner aufweisend ein Gebläse-System zum Ausgeben von Luft von dem Überdachungs-System aus zu einem das Überdachungs-System umgebenden Bereich.

11. Überdachungs-System gemäß Anspruch 7 und 9,
ferner aufweisend ein Steuersystem zum Steuern
der Temperatur der Luft in der Überdachung, wobei das Steuersystem mit einem Temperatursensor ausgestattet ist zum Messen der Temperatur in der Überdachung, und wobei das Steuersystem dazu eingerichtet ist, wenigstens den Aktuator für das Ventil der Luftführung und/oder den Aktuator für das Ventil zum Blockieren oder zumindest teilweise frei Lassen des Lufteinlasses sowie das System zum Erwärmen oder Kühlen des Fluid in Abhängigkeit von einer Differenz zwischen der gewünschten Temperatur und einer gemessenen Temperatur der Luft in der Überdachung zu steuern.

12. Überdachungs-System gemäß Ansprüchen 10 und 11,
wobei das Steuersystem ferner eingerichtet ist, um auch das Gebläse-System in Abhängigkeit von einer Differenz zwischen einer gewünschten Temperatur und einer gemessenen Temperatur der Luft in der Überdachung sowie einer gewünschten Geschwindigkeit zu steuern, bei welcher die gewünschte Temperatur zu erreichen ist.

## Revendications

1. Système pour hangar, comprenant:
une fondation (2);
une paire de montants (14) qui s'appuient chacun sur la fondation;
une liaison transversale (14) entre la paire de montants;
une construction de toit qui s'appuie sur les montants;
dans lequel un espace entre la fondation, les montants et la liaison transversale forme un premier espace et l'espace ente la liaison transversale, les montants et la construction de toit forme un deuxième espace;
un cadre de fenêtre (13) placé dans le premier ou deuxième espace;
une paroi intérieure (6) - paroi extérieure (8) placée dans l'autre du premier ou deuxième espace, dans lequel un canal d'air est formé entre les paroi intérieure et paroi extérieure de la paire paroi intérieure - paroi extérieure et dans lequel la paroi extérieure définit ou comprend une entrée d'air adaptée pour puiser de l'air depuis l'extérieur;
un échangeur de chaleur (9) placé dans le canal d'air;
un guide d'air (11) qui est relié à la liaison transversale et qui délimite le canal d'air d'un côté et forme barrière au flux d'air parallèlement à la paire paroi intérieure - paroi extérieure, et définit ou comprend une sortie d'air adaptée pour permettre un flux d'air dirigé dans le hangar.

2. Système pour hangar selon la revendication 1, dans lequel:
le cadre de fenêtre est relié sur une partie inférieure de celui-ci à la liaison transversale et s'appuie sur celui-ci;
la paroi intérieure est reliée à la paire de montants et s'étend vers le haut aussi loin que le guide d'air;
la paroi extérieure est reliée à la paire de montants et/ou à la liaison transversale et s'étend à une hauteur prédéterminée au-dessus du niveau du sol depuis la liaison transversale, dans laquelle l'ouverture entre le niveau du sol et la paroi extérieure forme l'entrée d'air.

3. Système pour hangar selon la revendication 1, dans lequel:
le cadre de fenêtre est relié sur un côté supérieur de celui-ci à la liaison transversale;
la paroi intérieure est reliée à la paire de montants et s'étend vers le bas depuis la construction de toit aussi loin que le guide d'air;
la paroi extérieure est reliée à la paire de montants et s'étend vers le haut depuis la liaison transversale à une hauteur prédéterminée sous la construction de toit, dans laquelle l'ouverture entre la construction de toit et la paroi extérieure forme l'entrée d'air.

4. Système pour hangar selon l'une quelconque des revendications précédentes, dans lequel le guide d'air comprend une première surface qui est couplée à la liaison transversale et est placée sensiblement transversalement dans le canal d'air, et comprend une deuxième surface qui est reliée à la première surface et forme un angle par rapport à la première surface, dans lequel la deuxième surface est dotée d'une ouverture qui définit la sortie d'air, ou dans lequel un espace entre la paroi intérieure et la deuxième surface définit la sortie d'air.

5. Système pour hangar selon l'une quelconque des revendications précédentes, dans lequel la sortie d'air et/ou l'entrée d'air sont réglables.

6. Système pour hangar selon la revendication 5, dans lequel le guide d'air comprend une soupape pour bloquer ou laisser la sortie d'air au moins partiellement dégagée et/ou dans lequel le système pour hangar comprend une soupape pour bloquer ou laisser l'entrée d'air au moins partiellement dégagée.

7. Système pour hangar selon la revendication 6, comprenant un premier actionneur pouvant être commandé pour actionner la soupape du guide d'air et/ou un deuxième actionneur pouvant être commandé pour actionner la soupape dans le but de bloquer ou de laisser l'entrée d'air au moins partiellement dégagée.

8. Système pour hangar selon l'une quelconque des revendications précédentes, dans lequel l'échangeur de chaleur comprend une pluralité d'éléments d'échange de chaleur, le long desquels s'écoule l'air puisé via l'entrée d'air.

9. Système pour hangar selon la revendication 8, dans lequel une température des éléments d'échange de chaleur est réglable en permettant à un fluide de s'écouler à travers les éléments, le hangar comprenant en outre un système de chauffage ou de refroidissement du fluide et une pompe pour pomper le fluide chauffé ou refroidi à travers les éléments.

10. Système pour hangar selon l'une quelconque des revendications précédentes, comprenant en outre un système de ventilateur pour évacuer l'air du système pour hangar vers une zone voisine du système pour hangar.

11. Système pour hangar selon les revendications 7 et 9,
comprenant en outre un système de commande pour contrôler la température de l'air dans le hangar, dans lequel le système de commande est doté d'un capteur de température pour mesurer la température dans le hangar, et dans lequel le système de commande est configuré pour commander au moins l'actionneur pour la soupape du guide d'air et/ou l'actionneur pour la soupape afin de bloquer ou laisser l'entrée d'air au moins partiellement dégagée, ainsi que le système de chauffage ou de refroidissement du fluide soumis à une différence entre une température souhaitée et une température mesurée de l'air dans le hangar.

12. Système pour hangar selon les revendications 10 et 11,
dans lequel le système de commande est configuré en outre pour commander également le système de ventilation soumis à une différence entre une température souhaitée et une température mesurée de l'air dans le hangar, ainsi qu'une vitesse souhaitée à la laquelle la température souhaitée doit être atteinte.
